# EUROPÄISCHE PATENTSCHRIFT

(11) **EP 3 366 503 B1**
(45) Veröffentlichungstag und Bekanntmachung des Hinweises auf die Patenterteilung: **19.06.2019**
(21) Anmeldenummer: 18156601.9
(22) Anmeldetag: 14.02.2018
(51) Int. Cl.: B60H 1/34

(54) **LUFTAUSSTRÖMER**
AIR VENT
DISPOSITIF D'ÉCOULEMENT D'AIR

(30) Priorität: 23.02.2017 DE 102017103760
(43) Veröffentlichungstag der Anmeldung: 29.08.2018
(73) Patentinhaber: Dr. Schneider Kunststoffwerke GmbH, 96317 Kronach-Neuses (DE)
(72) Erfinder: ENDRES, Gerhard, 95336 Mainleus (DE)

(56) Entgegenhaltungen:
- WO-A1-2016/013857
- WO-A1-2016/075111
- DE-A1-102010 023 528
- KR-B1- 100 693 554
- US-A1- 2012 291 893

## Beschreibung

Es wird ein Luftausströmer beschrieben, der mehrere um parallel verlaufende Achsen verschwenkbar gelagerte erste Luftleitelemente aufweist, die über einen Mitnehmer gekoppelt sind. Zusätzlich weist der Luftausströmer ein zweites Luftleitelement auf, über welches die Luft orthogonal zur Luftablenkung über die ersten Luftleitelemente verändert werden kann.

Luftausströmer dienen zur Ablenkung von ausgegebener Luft, die von einer Klimaanlage oder einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in den Fahrgastraum eines Fahrzeugs zu bringen. Luftausströmer können hierzu in einem Fahrzeugarmaturenbrett angeordnet sein. Fahrzeuge umfassen nicht abschließend Kraftfahrzeuge wie PKW, LKW, Busse und landwirtschaftliche Fahrzeuge sowie Züge, Flugzeuge und Schiffe.

Luftausströmer in Kraftfahrzeugen weisen oftmals mindestens eine Gruppe von verschwenkbar gelagerten Lamellen auf, die eine Ablenkung der ausgegebenen Luft ermöglichen. Es sind zudem Luftausströmer entwickelt worden, die eine geringe Höhe im Vergleich zu ihrer Breite aufweisen. Bei diesen Luftausströmern ist das Platzangebot zum Verschwenken von Lamellen relativ gering, sodass oftmals längsgeteilte Lamellen verwendet werden, um eine ausreichende Luftablenkung zu erreichen.

Ein solcher Luftausströmer ist bspw. aus DE 10 2006 002 663 A1 bekannt, wobei darin eine Ausströmdüse für ein Fluid mit einem von einem Gehäuse gebildeten Strömungskanal und mehrere im Bereich einer Austrittsöffnung vorgesehen parallele Lamellen zur Ausrichtung eines Fluidstroms offenbart wird. Die Lamellen sind zur gemeinsamen Verschwenkbarkeit mit einer Koppelstange mechanisch gekoppelt. Die Koppelstange verbindet die vorderen Lamellenteile, wobei die hinteren Lamellenteile in als Langlöcher ausgebildeten Führungskulissen im Gehäuse gelagert sind.

Darüber hinaus offenbart DE 10 2008 059 736 A1 eine einstellbare Düse mit zwei verschwenkbaren rohrförmigen Abschnitten und davor gelagerte verschwenkbare Lamellen. An einer Steuerlamelle ist ein Bedienelement verschiebbar gelagert, über welches die Lamellen und die rohrförmigen Abschnitte verschwenkt werden können. Sowohl die rohrförmigen Abschnitte als auch die Lamellen sind jeweils verschwenkbar an einem Gehäuse gelagert.

DE 18 12 283 B offenbart eine zur Entfrostung von Seitenfenstern dienende Luftleitdüse mit einem ersten Abschnitt und einem zweiten Abschnitt, wobei der erste Abschnitt einem Heißluftstrang zugeordnet ist und feststehende Lamellen aufweist. Der zweite Abschnitt ist einem Frischluftstrang zugeordnet und weist einen an einem Gehäuse verschwenkbar gelagerten Rahmen auf, in dem eine Vielzahl von Lamellen verschwenkbar gelagert ist.

DE 10 2013 101 887 A1 offenbart eine Einknopfbedienung für einen Luftausströmer, der eine in einem Gehäuse verschwenkbar gelagerte Lamelleneinheit und in Strömungsrichtung vorgelagerte Lamellen aufweist. Über die an der Lamelleneinheit angeordnete Einknopfbedienung können die Lamelleneinheit, die Lamellen und eine Schließklappe verschwenkt werden.

WO 2016/075111 A1 offenbart einen Luftausströmer nach dem Oberbegriff des Anspruchs 1. Bei konventionellen Luftausströmern aus dem Stand der Technik sind in der Regel eine erste Gruppe von Lamellen und eine zweite Gruppe von Lamellen vorgesehen, die über ein gemeinsames Bedienelement verstellt werden können. Die dafür erforderliche Kinematik zum Verschwenken der ersten Gruppe von Lamellen und der zweiten Gruppe von Lamellen weist eine Vielzahl von Bauteilen auf. Oftmals sind diese Kinematikbauteile komplex ausgestaltet und daher störungsanfällig. Zusätzlich muss für diese Kinematikbauteile ein Bauraum vorgesehen werden. Weiterhin besteht ein Problem darin, dass die Kinematikbauteile, welche teilweise in den Luftkanal ragen oder in diesem angeordnet sind, eine zusätzliche Luftablenkung bewirken. Hierdurch kann es ebenfalls zu Störgeräuschen kommen. Demgegenüber besteht die Aufgabe darin einen Luftausströmer anzugeben, der einen kleinen Bauraum benötigt, wenige Bauteile aufweist und die Nachteile des Stands der Technik behebt.

Die Aufgabe wird durch einen Luftausströmer gelöst, der mehrere um parallel verlaufende Achsen verschwenkbare erste Luftleitelemente, die über einen Mitnehmer gekoppelt sind, und ein rahmenförmiges zweites Luftleitelement aufweist, wobei das zweite Luftleitelement mit den äußeren ersten Luftleitelementen jeweils über ein Kugelgelenk und über die Kugelgelenke gelagert verbunden ist.

Das zweite Luftleitelement ermöglicht es einerseits aus dem Luftausströmer ausströmende Luft abzulenken und andererseits ein Verschwenken von dahinter gelagerten ersten Luftleitelementen durchzuführen. Der Luftausströmer benötigt deswegen kein gesondertes Bedienelement, welches verlagert werden muss um die ersten Luftleitelemente und das zweite Luftleitelement zu verschwenken. Es werden keine komplexen Verstellanordnungen benötigt. Für eine schwenkbewegliche Kopplung des zweiten Luftleitelementes mit den äußeren ersten Luftleitelementen, die über einen Mitnehmer mit den anderen ersten Luftleitelementen gekoppelt sind, sind Kugelgelenke vorgesehen. Die Kugelgelenke ermöglichen es das zweite Luftleitelement sowohl nach unten und nach oben zu verschwenken als auch innerhalb eines Ausströmergehäuses seitlich zu verlagern, um die ersten Luftleitelemente zu verschwenken. Der Luftausströmer kann auch so angeordnet sein, dass anstelle einer Ausrichtung mit einem Verschwenken des zweiten Luftleitelements nach oben und nach unten ein seitliches Verschwenken erfolgt und die ersten Luftleitelemente nach oben und nach unten verschwenkt werden.

Die äußeren beiden ersten Luftleitelemente können einen Verbindungsabschnitt aufweisen, in dem ein kugelförmiges Lagerelement angeordnet ist.

Ferner kann das zweite Luftleitelement im Bereich der Kugelgelenke jeweils eine Aufnahme aufweisen, in der das kugelförmige Lagerelement aufgenommen ist. Die Verbindungsabschnitte der äußeren beiden ersten Luftleitelemente überstehen die Luftleitflächen der ersten Luftleitelemente nach vorne, sodass bei einem Verschwenken der ersten Luftleitelemente durch eine Verlagerung des zweiten Luftleitelementes das zweite Luftleitelement ein Verschwenken der ersten Luftleitelemente nicht behindert.

In der Aufnahme kann ein Bremselement angeordnet sein. Das Bremselement dient dazu, eine gleichförmige Bewegung zu realisieren. Es soll verhindert werden, dass ein Verschwenken beziehungsweise eine Verlagerung des zweiten Luftleitelementes in oder aus einer Position in eine weitere Position leichter geht als zu einer anderen Stellung. Zudem soll ein unbeabsichtigtes Verschwenken beziehungsweise Verlagern nicht auftreten. Das Bremselement wird so ausgelegt, dass eine definierte Kraft aufgebracht werden muss, um eine Verlagerung zu erreichen. Die erforderliche Mindestauslösekraft für eine solche Bewegung kann nach Maßgabe verschiedener Parameter des Luftausströmers festgelegt werden. Die Parameter können bspw. die Größe des Luftausströmers, das verwendete Material, der Temperaturbereich, in welchem der Luftausströmer betrieben wird oder welchem dieser ausgesetzt ist, und die geförderte Luftmenge pro Zeiteinheit betreffen.

In der Aufnahme kann in weiteren Ausführungsformen eine Feder angeordnet sein, welche das kugelförmige Lagerelement gegen das Bremselement drückt. Über die Feder kann eine bestimmte Mindestkraft vorgegeben werden, welche zur Verlagerung des zweiten Luftleitelementes erforderlich ist.

Das Bremselement kann vorzugsweise aus Silikon oder einem thermoplastischen Elastomer (TPE) bestehen oder Silikon oder ein thermoplastisches Elastomer (TPE) aufweisen. Als Silikondämpfer bekannte Bremselemente bieten bei relativ geringem Verschleiß über einen langen Benutzungszeitraum die Möglichkeit einer definierten und gleichbleibenden Bremswirkung. Auch thermoplastische Elastomere weisen solche Eigenschaften auf und ermöglichen eine Verwendung über einen langen Benutzungszeitraum hinweg. Darüber hinaus können auch andere geeignete Materialien für das Bremselement verwendet werden. Innerhalb der Aufnahme kann ein Übertragungselement angeordnet sein, welches über die Feder mit Druck beaufschlagt ist. Das Übertragungselement drückt dabei mittels der Feder das kugelförmige Lagerelement gegen das Bremselement.

In weiteren Ausführungsformen können das Bremselement und/oder das Übertragungselement einen im Wesentlichen halbkugelförmigen Aufnahmeabschnitt aufweisen. Das Bremselement und/oder das Übertragungselement weisen in einer solchen Ausführungsform eine relativ große Kontaktfläche zu dem kugelförmigen Lagerelement auf. Dies ist vorteilhaft für die Ausübung einer Brems- bzw. Dämpfwirkung über das Bremselement. Insbesondere wird in sämtlichen Stellungen des zweiten Luftleitelements zu den ersten Luftleitelementen eine gleich große Bremsfläche bereitgestellt. D.h. die Flächen der kugelförmigen Lagerelemente, die an den Bremselementen und den Übertragungselementen anliegen, sind in allen Stellungen im Wesentlichen gleich groß.

Das zweite Luftleitelement kann sich von einem der äußeren Luftleitelemente bis zu dem anderen der äußeren Luftleitelemente erstrecken und eine gegenüber den ersten Luftleitelementen geringere Höhe aufweisen. Das zweite Luftleitelement ist in der Regel innerhalb eines Luftkanals beziehungsweise eines Gehäuses des Luftausströmers gelagert. Um ein Verschwenken des zweiten Luftleitelementes und eine Verlagerung des zweiten Luftleitelementes sicher zu stellen, sind die Wände des rahmenförmigen zweiten Luftleitelementes in einer Neutralstelle beabstandet zu den äußeren Kanalwänden des Luftausströmers angeordnet. Das zweite Luftleitelement ist jedoch so breit ausgelegt, dass dieses sämtliche erste Luftleitelemente überspannt. Die ersten Luftleitelemente können in ihrer Höhe so ausgebildet sein, dass diese im Wesentlichen die Höhe des Luftkanals des Luftausströmergehäuses aufweisen.

Das zweite Luftleitelement kann weiter mindestens ein sich parallel in Längserstreckung angeordnetes weiteres Luftelement aufweisen. Zusätzlich kann auch ein Luftleitelement vorgesehen, das sich orthogonal zu dem mindestens einen weiteren Luftleitelement erstreckt. Zumindest das eine weitere Luftleitelement dient als Ablenkfläche für ausströmende Luft. An diesem weiteren Luftleitelement kann ein Bedienknopf vorgesehen sein. Der Bedienknopf ist jedoch nicht relativ zu dem zweiten Luftleitelement verlagerbar, sondern fester Bestandteil beziehungsweise fest an dem zweiten Luftleitelement angeordnet.

Die Komponenten des Luftausströmers können aus Kunststoff bestehen und können in einem Spritzgussverfahren einfach, kostengünstig und in hoher Stückzahl hergestellt werden. Der Kunststoff kann zusätzliche Zusätze aufweisen, sodass dieser im Hinblick auf die geforderten Festigkeiten und weiteren Materialeigenschaften ausgebildet ist. Hierzu kann der Kunststoff Glasfaser, Kohlefaser oder andere Zusätze aufweisen.

Zusätzlich können die Komponenten des Luftausströmers beleuchtbar ausgebildet sein. Ferner kann auch mindestens eine der Komponenten aus einem durchleuchtbaren Kunststoff bestehen oder durchleuchtbaren Kunststoff aufweisen, sodass über eine seitliche oder rückseitige Beleuchtung ein entsprechendes optisches Erscheinungsbild erreicht wird. Hierzu kann mindestens eine Beleuchtungseinrichtung mindestens eine LED aufweisen.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung eines Luftausströmers;
- Fig. 2: eine Explosionszeichnung des Luftausströmers von Fig. 1;
- Fig. 3: eine vergrößerte Darstellung eines Bereichs mit einem Kugelgelenk in Explosionsansicht;
- Fig. 4: eine schematische Darstellung einer Aufnahme eines zweiten Luftleitelementes;
- Fig. 5: eine vergrößerte Darstellung eines Bereichs mit einem Kugelgelenk;
- Fig. 6: verschiedene Ansichten des Luftausströmers von Fig. 1 in einer Neutralstellung;
- Fig. 7: verschiedene Ansichten des Luftausströmers von Fig. 1 mit einem nach unten verschwenkten zweiten Luftleitelement;
- Fig. 8: verschiedene Ansichten des Luftausströmers von Fig. 1 mit zur Seite verschwenkten ersten Luftleitelementen; und
- Fig. 9: verschiedene Ansichten des Luftausströmers von Fig. 1 mit einem nach oben verschwenkten zweiten Luftleitelement und mit zur Seiten verschwenkten ersten Luftleitelementen.

In den Zeichnungen mit gleichen Bezugszeichen versehene Teile entsprechen im Wesentlichen einander, sofern nichts anderes angegeben ist. Darüber hinaus wird darauf verzichtet Bestandteile zu zeigen und zu beschreiben, welche nicht wesentlich zum Verständnis der hierin offenbarten technischen Lehre sind.

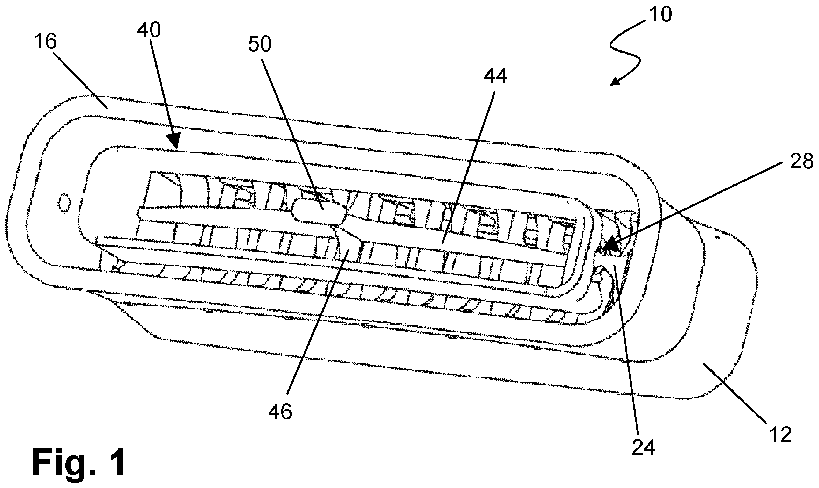

Fig. 1 zeigt eine perspektivische Darstellung eines Luftausströmers 10. Der Luftausströmer 10 kann beispielsweise in einem Armaturenbrett eines Kraftfahrzeugs angeordnet sein. Ein solcher Luftausströmer 10 kann aber auch an anderen Positionen in einem Fahrzeug angeordnet sein. Der Luftausströmer 10 weist eine größere Breite wie Höhe auf und wird auch als Fugenausströmer bezeichnet. Ein solcher Luftausströmer 10 kann sowohl in PKW, LKW, Bussen und anderen Straßenfahrzeugen sowie in Schienenfahrzeugen, Flugzeugen und Schiffen eingesetzt werden.

Der Luftausströmer 10 weist ein Gehäuse 12 auf. Das Gehäuse 12 umgibt einen Luftkanal über den Luft von einer Belüftungseinrichtung wie einer Klimaanlage zugeführt und über eine Luftaustrittsöffnung ausgegeben wird. Im Bereich der Luftaustrittsöffnung weist der Luftausströmer 10 einen Zierrahmen 16 auf, der am Gehäuse 12 befestigt ist. Im Gehäuse 12 sind ferner erste Luftleitelemente 20 und 22 verschwenkbar gelagert. Die ersten Luftleitelementen 20 und 22 sind über einen Mitnehmer 18 gekoppelt. Zusätzlich ist in dem Luftausströmer 10 ein zweites Luftleitelement 40 angeordnet. Das zweite Luftleitelement 40 ist rahmenförmig ausgebildet und weist bei der in den Figuren gezeigten Ausführungsform ein weiteres Luftleitelement 44 und ein weiteres Luftleitelement 46 auf, die sich mittig kreuzen. An dieser Stelle ist auch ein Bedienknopf 50 angeordnet.

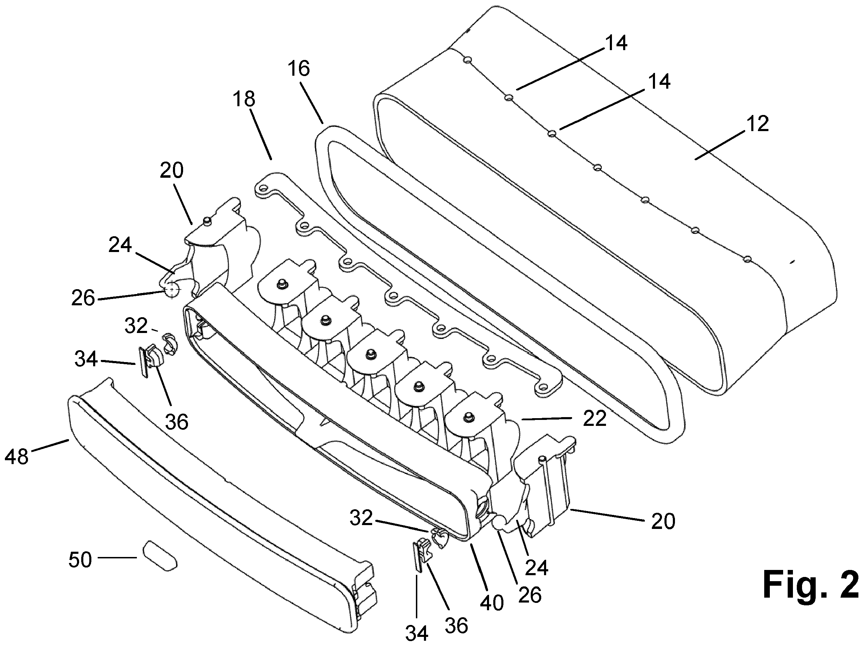

Fig. 2 zeigt eine Explosionszeichnung des Luftausströmers 10. Die ersten Luftleitelemente 20 und 22 sind über Lagerzapfen in Lageröffnungen 14 in dem Gehäuse 12 verschwenkbar gelagert. Über den Mitnehmer 18 sind die ersten Luftleitelemente 20 und 22 so miteinander gekoppelt, dass bei einem Verschwenken der äußeren ersten Luftleitelemente 20 die anderen ersten Luftleitelemente 22 synchron mit verschwenkt werden. Die ersten Luftleitelemente 20 und 22 werden stets gemeinsam verschwenkt. Die äußeren ersten Luftleitelemente 20 weisen einen Verbindungsabschnitt 24 mit einem daran angeordneten kugelförmigen Lagerelement 26 auf. Die kugelförmigen Lagerelemente 26 sind in entsprechenden Aufnahmen 42 in dem zweiten Luftleitelement 40 aufgenommen. Das zweite Luftleitelement 40 kann daher unabhängig von der Stellung und Ausrichtung der ersten Luftleitelemente 20 und 22 nach oben und unten verschwenkt werden. Wird das zweite Luftleitelement 40 seitlich verlagert, so bewirkt dies ein Verschwenken der äußeren ersten Luftleitelemente 20 sowie der ersten Luftleitelemente 22, die über den Mitnehmer 18 mit den äußeren Luftleitelementen 20 gekoppelt sind.

Der Bedienknopf 50 ist auf einem nach vorne ragenden Vorsprung des Luftleitelementes 44 angeordnet. Ein Dekorrahmen 48 ist in das zweite Luftleitelement 40 eingesetzt und kann beispielsweise eingefärbt sein, um dem Luftausströmer 10 ein entsprechendes Erscheinungsbild zu verleihen.

Zusätzlich werden über den Dekorrahmen 48 weitere Komponenten sicher gehalten. Damit zum Verschwenken der ersten Luftleitelemente 20 und 22 sowie des zweiten Luftleitelementes 40 eine bestimmte Mindestbedienkraft aufgebracht werden muss und damit kein zu leichtgängiges Verschwenken erfolgt, sind in den Aufnahmen 42 jeweils ein Bremselement 32, eine Feder 34 sowie ein Übertragungselement 36 angeordnet. Im eingebauten Zustand werden diese Komponenten über den Dekorrahmen 48 gehalten.

Der Luftausströmer 10 benötigt keine komplexen Anordnungen zum Verschwenken der ersten Luftleitelemente 20 und 22 sowie des Luftleitelementes 40. Zudem ragen keine Kinematikbauteile zum Verschwenken der Luftleitelemente 20, 22 und 40 in den Luftkanal. Solche Kinematikbauteile führen in der Regel zu einer zusätzlichen aber ungewollten Ablenkung der den Luftausströmer 10 durchströmenden Luft. Ferner ist kein Bedienelement erforderlich, welches relativ zu dem zweiten Luftleitelement 40 verlagert werden muss. Der Bedienknopf 50 ist fest mit dem zweiten Luftleitelement 40 verbunden.

Das Bremselement 32, die Feder 34 und das Übertragungselement 36 sind so in den Aufnahmen 42 angeordnet, dass das kugelförmige Lagerelement 26 über das Bremselement 32 gedämpft wird. Im zusammengebauten Zustand der Komponenten des Luftausströmers 10 kommt es daher nicht zu einem selbstständigen Verschwenken der Komponenten. Beispielsweise wird verhindert, dass bei einer Erschütterung des Fahrzeugs ein Verstellen der Luftleitelemente erfolgen würde. Dabei ist zudem eine Mindestbedienkraft erforderlich, um die Komponenten des Luftausströmers 10 (erste Luftleitelemente 20 und 22, zweites Luftleitelement 40) zu verschwenken. Weiterhin wird sichergestellt, dass zum Verschwenken des zweiten Luftleitelementes 40 und der ersten Luftleitelemente 20 und 22 über den gesamten Verschwenkbereich hinweg eine gleichbleibende Kraft erforderlich ist.

Durch die Reduzierung der für die Kinematik zum Verschwenken erforderlichen Bauteile und der Integration in das zweite Luftleitelement 40 kann auch bei einem Fugenausströmer, der gegenüber seiner Länge eine relativ geringe Höhe aufweist, eine Luftablenkung über das zweite Luftleitelement 40 bereitgestellt werden, die der Luftablenkung von herkömmlichen Luftausströmern entspricht oder diese sogar übertrifft.

Bei Fugenausströmern besteht das Problem häufig darin, dass aufgrund der geringen Höhe nur relativ wenige Horizontallamellen angeordnet sein können. Daher kann auch nur eine geringe Luftablenkung erreicht werden. Um dieses Problem zu beheben, wurde bereits vorgeschlagen sogenannte Flexlamellen oder geteilte Lamellen vorzusehen. Der hierin beschriebene Luftausströmer 10 weist jedoch ein rahmenförmiges zweites Luftleitelement 40 auf, das neben einem weiteren Luftleitelement 44 noch weitere parallel dazu angeordnete Luftleitelemente aufweisen kann. Wie in den nachfolgenden Figuren gezeigt, kann auch bei einer solchen Anordnung eine relativ starke Luftablenkung erreicht werden.

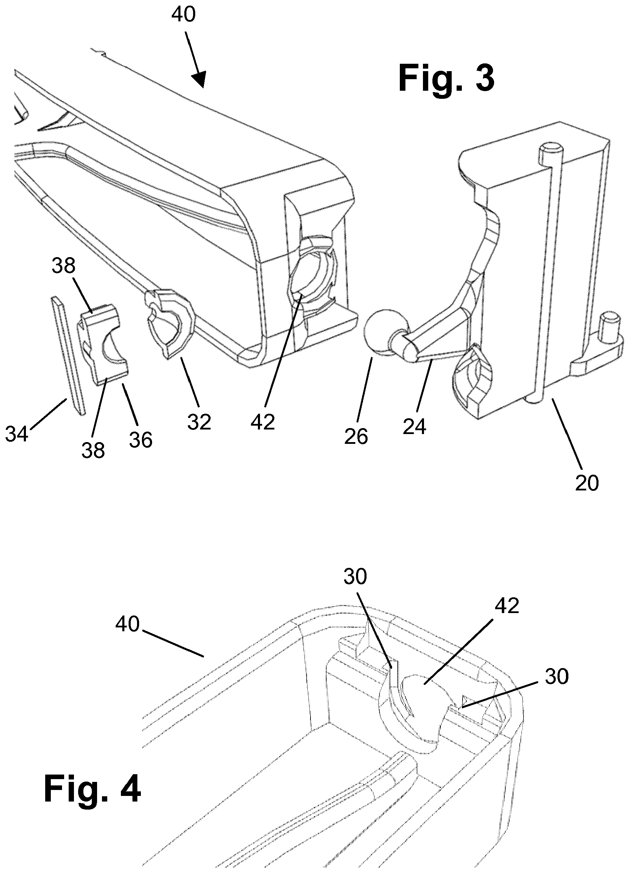

Zuerst zeigt jedoch Fig. 3 eine vergrößerte Darstellung eines Bereichs mit einem Kugelgelenk 28 in Explosionsansicht. Im zusammengebauten Zustand der Komponenten des Luftausströmers 10 werden die kugelförmigen Lagerelemente 26 von einer Seite von einem Bremselement 32 und von der anderen Seite von einem Übertragungselement 36 umgegeben. Über die Feder 34 wird das Übertragungselement 36 gegen das kugelförmige Lagerelement 26 gedrückt, welches wiederum gegen das Bremselement 32 gedrückt wird. Über die Feder 34 kann daher die Druckkraft auf die Lagerelemente 26 und damit die Mindestkraft beim Verstellen der Luftleitelemente 20, 22 und 40 festgelegt werden.

Fig. 4 zeigt eine schematische Darstellung einer Aufnahme 42 eines zweiten Luftleitelementes 40. Die Aufnahme 42 weist zusätzlich Führungen 30 auf, über welche das Bremselement 32 mit seinen korrespondierenden Vorsprüngen eingesetzt wird. Anschließend kann über die Öffnung der Aufnahme 42 das Lagerelement 26 eingesetzt werden und liegt dabei auf der halbkugelartigen Lageröffnung des Bremselementes 32 auf. Anschließend wird das Übertragungselement 36 in die Führungen eingesetzt, wobei die Vorsprünge 38 über die Führungen 30 sicher geführt sind. Das bedeutet, dass im Betrieb des Luftausströmers 10, beispielsweise bei einem Verschwenken, das Übertragungselement 36 nicht verkanten kann. Anschließend wird die Feder 34 eingesetzt, sodass diese gegen das Übertragungselement 36 drückt. Das Übertragungselement 36 drückt dann das Lagerelement 26 gegen das Bremselement 32, und erzeugt eine Reibung beim Verschwenken. Damit die Komponenten sicher gehalten werden, wird anschließend der Dekorrahmen 48 eingesetzt, der die entsprechenden Komponenten fest in Position hält. Der Dekorrahmen 48 kann beispielsweise über eine Rastverbindung mit dem zweiten Luftleitelement 40 verbunden werden. Alternativ oder zusätzlich dazu kann auch eine Klebeverbindung, ein Verschrauben oder ein Ultraschallschweißen erfolgen.

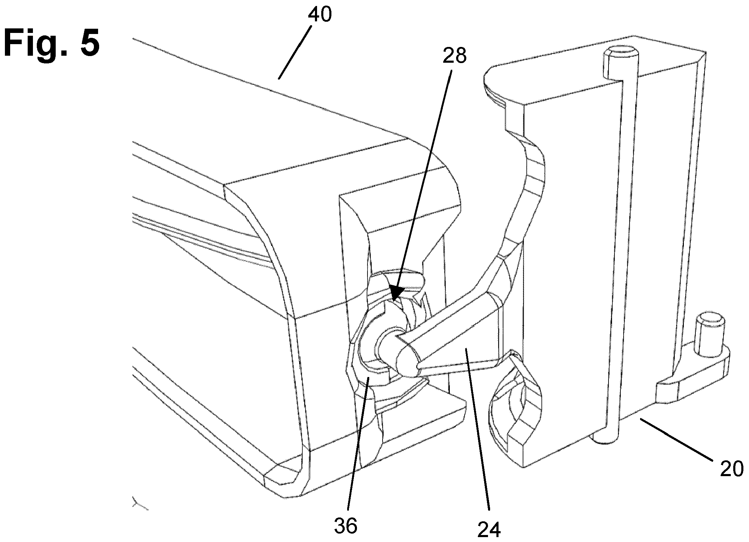

Fig. 5 zeigt eine vergrößerte Darstellung eines Bereichs mit einem Kugelgelenk 28. Im zusammengebauten Zustand der Komponenten ist im Wesentlichen eine Hälfte des kugelförmigen Lagerelements 26 von dem Übertragungselement 36 umgeben und wird über das Übertragungselement 36 gegen das Bremselement 32 gedrückt, welches ebenfalls das kugelförmige Lagerelement 26 teilweise bzw. zur Hälfte umgibt. Über die Feder 34 wird ein Druck auf das Übertragungselement 36 ausgeübt. Dieser Druck führt dazu, dass das kugelförmige Lagerelement 26 gegen das Bremselement 20 gedrückt wird. Aufgrund der Ausgestaltung der Komponenten ist dabei unerheblich, ob ein Verschwenken des zweiten Luftleitelementes 40 nach oben oder unten oder ein Verschwenken der ersten Luftleitelemente 20 und 22 durch eine seitliche Verlagerung des zweiten Luftleitelementes 40 auftritt.

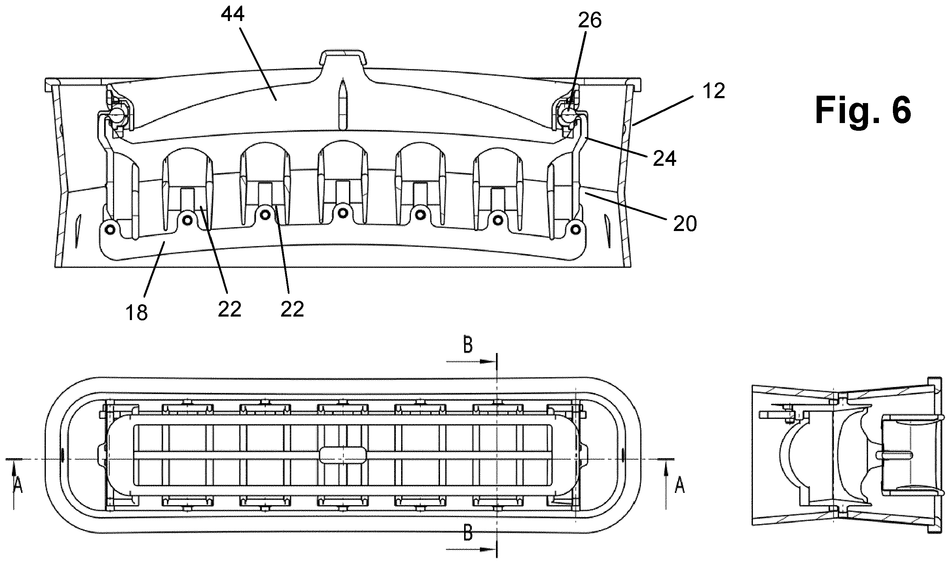

Fig. 6 zeigt verschiedene Ansichten des Luftausströmers 10 von Fig. 1 in einer Neutralstellung. In der Neutralstellung befindet sich das zweite Luftleitelement 40 mittig innerhalb des Gehäuses 12 und weist zu den gegenüberliegenden Seitenwänden im Wesentlichen den gleichen Abstand auf. Durchströmende Luft wird dann ohne Ablenkung im Wesentlichen geradlinig ausgegeben. Die Schnittansichten entlang der Linien A-A und B-B zeigen, dass keine Kinematikbauteile zum Verschwenken der Luftleitelemente 20, 22 und 40 in den Luftkanal ragen. Es kommt daher zu keiner Verwirbelung der ausströmenden Luft. Die Geräuschbildung wird dadurch ebenfalls reduziert.

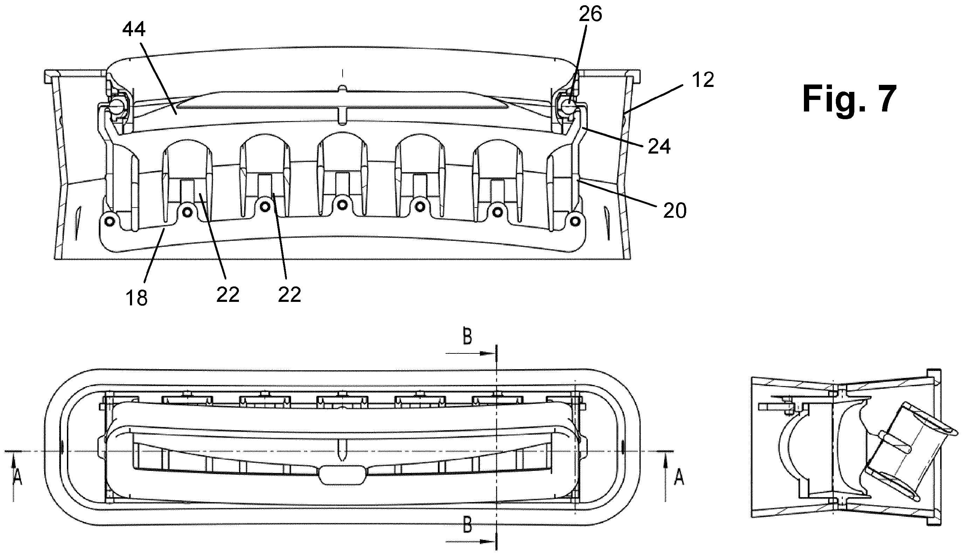

Fig. 7 zeigt verschiedene Ansichten des Luftausströmers 10 von Fig. 1 mit einem nach unten verschwenkten zweiten Luftleitelement 40. Wie insbesondere der Schnittansicht entlang der Linie B-B zu entnehmen ist, kann eine gute Luftablenkung erreicht werden. Dies liegt daran, dass das rahmenförmige zweite Luftleitelement 40 analog zu einer Luftdüse, wie sie beispielsweise bei Kugellüftern bekannt ist, nach unten verschwenkt werden kann. Es erfolgt kein Verschwenken von parallel gelagerten Lamellen sondern eine gesamtheitliches Verschwenken des zweiten Luftleitelementes 40. Trotz der relativ geringen Höhe des Luftausströmers 10 kann eine Luftablenkung erreicht werden, die der von herkömmlichen Luftausströmern mit einer Vielzahl von verschwenkbar gelagerten Lamellen entspricht. Bei dem Luftausströmer 10 sind bspw. Luftablenkungen über 40° nach oben und unten erreichbar.

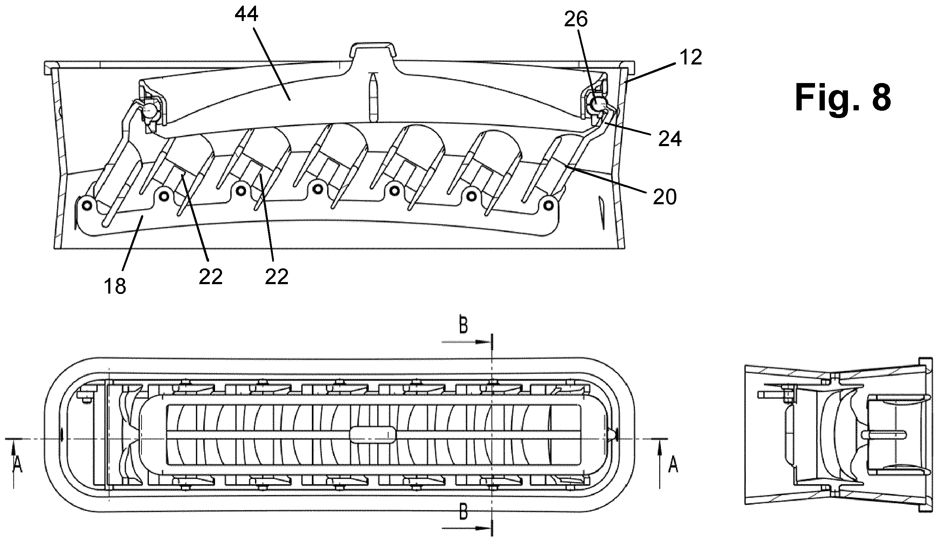

Fig. 8 zeigt verschiedene Ansichten des Luftausströmers 10 von Fig. 1 mit zur Seite verschwenkten ersten Luftleitelementen 20 und 22. Um eine seitliche Luftablenkung zu erreichen wird lediglich das zweite Luftleitelement 40 seitlich verlagert. Über die Kugelgelenke 28 erfolgt ein Verschwenken der äußeren ersten Luftleitelementen 20 sowie der ersten Luftleitelemente 22 die über den Mitnehmer 18 mit den äußeren Luftleitelementen 20 gekoppelt sind.

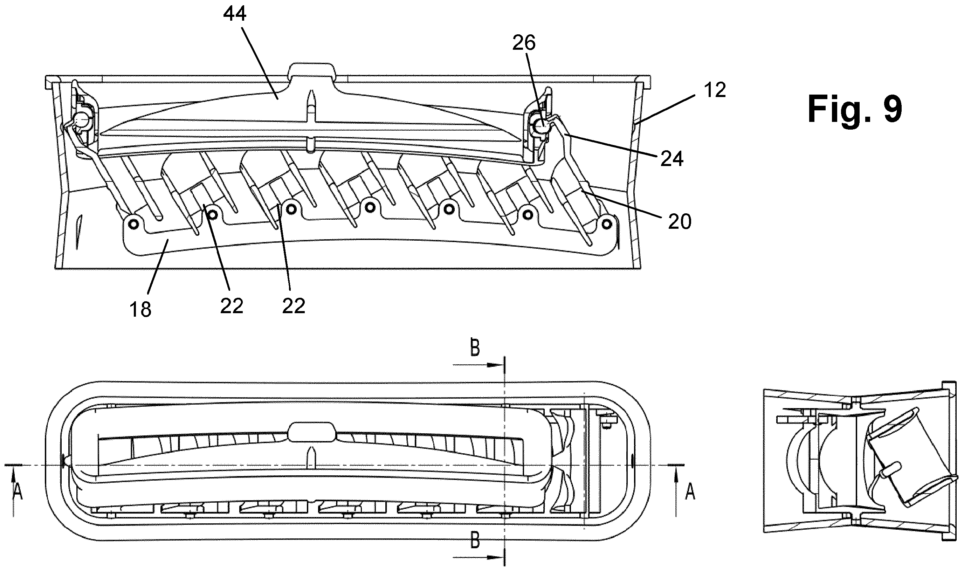

Fig. 9 zeigt verschiedene Ansichten des Luftausströmers 10 von Fig. 1 mit einem nach oben verschwenkten zweiten Luftleitelement 40 und mit zur Seite verschwenkten ersten Luftleitelementen 20 und 22. Die ersten Luftleitelemente 20 und 22 können durch eine seitliche Verlagerung des zweiten Luftleitelementes 40 verschwenkt werden. Zusätzlich kann das zweite Luftleitelement 40 über die Kugelgelenke 28 nach oben verschwenkt werden. Das Verschwenken der jeweiligen Luftleitelemente, nämlich zweites Luftleitelement 40 und erste Luftleitelemente 20, 22, erfolgt unabhängig voneinander oder kann gemeinsam durchgeführt werden. Aufgrund der Lagerung des zweiten Luftleitelementes 40 über die Kugelgelenke 28 ist keine direkte Kopplung mit dem Gehäuse 12 des Luftausströmers 10 erforderlich. Lediglich die ersten Luftleitelemente 20 und 22 sind verschwenkbar am Gehäuse 12 angeordnet.

In Abhängigkeit des maximal zu erreichenden Erfolgs beim Ablenken der Luft sind die Abstände der jeweiligen Luftleitelemente 40 sowie 22 und 20 festzulegen. Entsprechend muss auch die Dimensionierung des zweiten Luftleitelementes 40 in Bezug auf die Luftaustrittsöffnung des Luftausströmers 10 gewählt werden, damit ein entsprechendes seitliches Verschwenken der ersten Luftleitelemente 20 und 22 durchgeführt werden kann. Das Verschwenken nach oben des zweiten Luftleitelementes 40 beziehungsweise nach unten kann durch die Ausbildung der ersten Luftleitelemente 20 und 22 (siehe Schnittansicht von Fig. 9) beschränkt sein oder durch ein Anstoßen an die oberen und unteren Wände des Gehäuses 12 begrenzt werden.

Bei dem in den Figuren gezeigten Luftausströmer 10 übernimmt das zweite Luftleitelement 40 auch die Funktion des Bedienelementes, welches bei herkömmlichen Luftausströmer vorgesehen ist. Vorteilhaft ist weiter, dass nur ein geringer Bauraum erforderlich ist, der für die Kinematikbauteile zum Verschwenken der Luftleitelemente 20, 22 und 40 erforderlich ist.

### Bezugszeichenliste

- 10: Luftausströmer
- 12: Gehäuse
- 14: Lageröffnung
- 16: Zierrahmen
- 18: Mitnehmer
- 20: äußeres erstes Luftleitelement
- 22: erstes Luftleitelement
- 24: Verbindungsabschnitt
- 26: kugelförmiges Lagerelement
- 28: Kugelgelenk
- 30: Führung
- 32: Bremselement
- 34: Feder
- 36: Übertragungselement
- 38: Vorsprung
- 40: zweites Luftleitelement
- 42: Aufnahme
- 44: Luftleitelement
- 46: Luftleitelement
- 48: Dekorrahmen
- 50: Bedienknopf

## Patentansprüche

1. Luftausströmer mit mehreren um parallel verlaufende Achsen verschwenkbar gelagerten ersten Luftleitelementen (20, 22), die über einen Mitnehmer (18) gekoppelt sind, und mit einem rahmenförmigen zweiten Luftleitelement (40), **dadurch gekennzeichnet, dass** das zweite Luftleitelement (40) mit den äußeren ersten Luftleitelementen (20) jeweils über ein Kugelgelenk (28) verbunden und über die Kugelgelenke (28) gelagert ist.

2. Luftausströmer nach Anspruch 1, wobei die äußeren ersten Luftleitelemente (20) einen Verbindungsabschnitt (24) aufweisen, an dem ein kugelförmiges Lagerelement (26) angeordnet ist.

3. Luftausströmer nach Anspruch 2, wobei das zweite Luftleitelement (40) im Bereich der Kugelgelenke (28) jeweils eine Aufnahme (42) aufweist, in der das kugelförmige Lagerelement (26) aufgenommen ist.

4. Luftausströmer nach Anspruch 3, wobei in der Aufnahme (42) ein Bremselement (32) angeordnet ist.

5. Luftausströmer nach Anspruch 4, wobei in der Aufnahme (42) eine Feder (34) angeordnet ist, welche das kugelförmige Lagerelement (26) gegen das Bremselement (32) drückt.

6. Luftausströmer nach Anspruch 5, wobei das Bremselement (32) aus Silikon oder einem thermoplastischen Elastomer besteht, oder Silikon oder ein thermoplastisches Elastomer aufweist.

7. Luftausströmer nach Anspruch 5 oder 6, wobei in der Aufnahme (42) ein Übertragungselement (36) angeordnet ist, welches über die Feder (34) mit Druck beaufschlagt ist.

8. Luftausströmer nach Anspruch 7, wobei das Bremselement (32) und/oder das Übertragungselement (36) einen kugelförmigen Aufnahmeabschnitt aufweisen.

9. Luftausströmer nach einem der Ansprüche 1 bis 8, wobei das zweite Luftleitelement (40) sich von einem der äußeren Luftleitelemente (20) bis zu dem anderen der äußeren Luftleitelemente (20) erstreckt, und wobei das zweite Luftleitelement (40) gegenüber den ersten Luftleitelementen (20, 22) eine geringere Höhe aufweist.

10. Luftausströmer nach einem der Ansprüche 1 bis 9, wobei das zweite Luftleitelement (40) mindestens ein sich parallel in Längserstreckung angeordnetes weiteres Luftleitelement (44) aufweist.

## Claims

1. Air vent with a plurality of first air guide elements (20, 22), which are mounted to be pivotable about parallelly extending axes and which are coupled by way of an entrainer (18), and with a frame-shaped second air guide element (40), **characterised in that** the second air guide element (40) is connected with each of the outer first air guide elements (20) by way of a respective ball joint (28) and is mounted by way of the ball joint (28).

2. Air vent according to claim 1, wherein the outer first air guide elements (20) have a connecting section (24) at which a spherical bearing element (26) is arranged.

3. Air vent according to claim 2, wherein the second air guide element (40) has in the region of the ball joints (28) a respective receptacle (42) in which the spherical bearing element (26) is received.

4. Air vent according to claim 3, wherein a brake element (32) is arranged in the receptacle (42).

5. Air vent according to claim 4, wherein a spring (34) urging the spherical bearing element (26) against the brake element (32) is arranged in the receptacle (42).

6. Air vent according to claim 5, wherein the brake element (32) consists of silicon or a thermoplastic elastomer or comprises silicon or a thermoplastic elastomer.

7. Air vent according to claim 5 or 6, wherein a transmission element (36) loaded with pressure by way of the spring (34) is arranged in the receptacle (42).

8. Air vent according to claim 78, wherein the brake element (32) and/or the transmission element (36) has or have a spherical receiving section.

9. Air vent according to any one of claims 1 to 8, wherein the second air guide element (40) extends from one of the outer air guide elements (20) to the other one of the outer air guide elements (20) and wherein the second air guide element (40) has a lower height by comparison with the first air guide elements (20, 22).

10. Air vent according to any one of claims 1 to 9, wherein the second air guide element (40) comprises at least one further air guide element (44) arranged to be parallel in length direction.

## Revendications

1. Dispositif d'écoulement d'air avec plusieurs premiers éléments de guidage d'air (20, 22) montés de manière pivotante autour d'axes s'étendant en parallèle, qui sont couplés par le biais d'un élément d'entraînement (18), et avec un deuxième élément de guidage d'air (40) en forme de cadre, **caractérisé en ce que** le deuxième élément de guidage d'air (40) est relié aux premiers éléments de guidage d'air extérieurs (20) respectivement par le biais d'une articulation sphérique (28) et est monté par le biais des articulations sphériques (28).

2. Dispositif d'écoulement d'air selon la revendication 1, dans lequel les premiers éléments de guidage d'air extérieurs (20) présentent une section de liaison (24), au niveau de laquelle un élément de palier sphérique (26) est agencé.

3. Dispositif d'écoulement d'air selon la revendication 2, dans lequel le deuxième élément de guidage d'air (40) présente dans la zone des articulations sphériques (28) respectivement un logement (42), dans lequel l'élément de palier sphérique (26) est logé.

4. Dispositif d'écoulement d'air selon la revendication 3, dans lequel un élément de frein (32) est agencé dans le logement (42).

5. Dispositif d'écoulement d'air selon la revendication 4, dans lequel un ressort (34), lequel pousse l'élément de palier sphérique (26) contre l'élément de frein (32), est agencé dans le logement (42).

6. Dispositif d'écoulement d'air selon la revendication 5, dans lequel l'élément de frein (32) est en silicone ou en un élastomère thermoplastique, ou présente du silicone ou un élastomère thermoplastique.

7. Dispositif d'écoulement d'air selon la revendication 5 ou 6, dans lequel un élément de transmission (36), lequel est sollicité en pression par le biais du ressort (34), est agencé dans le logement (42).

8. Dispositif d'écoulement d'air selon la revendication 7, dans lequel l'élément de frein (32) et/ou l'élément de transmission (36) présentent une section de logement sphérique.

9. Dispositif d'écoulement d'air selon l'une quelconque des revendications 1 à 8, dans lequel le deuxième élément de guidage d'air (40) s'étend d'un des éléments de guidage d'air extérieurs (20) jusqu'à l'autre des éléments de guidage d'air extérieurs (20), et dans lequel le deuxième élément de guidage d'air (40) présente une hauteur inférieure par rapport aux premiers éléments de guidage d'air (20, 22).

10. Dispositif d'écoulement d'air selon l'une quelconque des revendications 1 à 9, dans lequel le deuxième élément de guidage d'air (40) présente au moins un autre élément de guidage d'air (44) agencé en parallèle dans l'extension longitudinale.
